# EUROPEAN PATENT APPLICATION

(11) **EP 3 070 526 A1**
(43) Date of publication of application: **21.09.2016**
(21) Application number: 16158133.5
(22) Date of filing: 01.03.2016
(51) Int. Cl.: G03B 21/20

(54) **IMAGE PROJECTION APPARATUS, AND LIGHT SOURCE UNIT**

(30) Priority: 19.03.2015 JP 2015056347
(71) Applicant: Ricoh Company, Ltd., Tokyo 143-8555 (JP)
(72) Inventor: MIKUTSU, YASUNARI, Ohta-ku, Tokyo 143-8555 (JP); FUJIOKA, TETSUYA, Ohta-ku, Tokyo 143-8555 (JP); KANAI, HIDEO, Ohta-ku, Tokyo 143-8555 (JP); TSUCHIYA, SATOSHI, Ohta-ku, Tokyo 143-8555 (JP); MIKAWA, AKIHISA, Ohta-ku, Tokyo 143-8555 (JP); MASHIMO, JUN, Ohta-ku, Tokyo 143-8555 (JP); NISHI, YUKIMI, Ohta-ku, Tokyo 143-8555 (JP); HIRAMATSU, TAKAHIRO, Ohta-ku, Tokyo 143-8555 (JP); SAITO, YOSHITO, Ohta-ku, Tokyo 143-8555 (JP)
(74) Representative: Leeming, John Gerard

(57) **Abstract**

An image projection apparatus (1) includes an outer casing (18) having a mounting port (18a), and a light source unit (50) detachably disposed in a body of image projection apparatus (1) through the mounting port (18a). The light source unit (50) includes a light source (51) to emit light to be used for projecting an image, a light source housing (54) to retain the light source (51), and a cover (52) integrated with the light source housing (54) to cover the mounting port (18a).

## Description

### BACKGROUND

### Technical Field

The present invention relates to an image projection apparatus, and a light source unit.

### Background Art

Typically, projectors have a configuration including a light source unit having a light source, and an image generation element, in which the light source emits light, and the light irradiates the image generation element to generate a projection image to be projected on a projection face. Typically, the light source unit is detachable from a body frame of the projector.

JP-2006-343503-A describes an image projection apparatus, in which a light source unit is detachably disposed to a body frame of the image projection apparatus, and when the lifetime of a light source of the light source unit ends, the light source unit can be replaced. The image projection apparatus has a top face opening on an outer casing (i.e., mounting port) covered by a lamp cover. The light source unit can be replaced through the top face opening by removing the lamp cover from the mounting port.

However, as to the image projection apparatus of JP-2006-343503-A, the following operational procedure is required for replacing the light source unit. Specifically, the lamp cover is removed from the top face opening, the light source unit is replaced through the top face opening, and then the lamp cover is attached to the top face opening. This operational procedure are complicated works for users.

### SUMMARY

In one aspect of the present invention, an image projection apparatus is devised. The image projection apparatus includes an outer casing having a mounting port, a light source unit detachably disposed in a body of image projection apparatus through the mounting port. The light source unit includes a light source to emit light to be used for projecting an image, a light source housing to retain the light source, and a cover integrated with the light source housing to cover the mounting port.

In another aspect of the present invention, a light source unit detachably disposed to an image projection apparatus is devised. The light source unit is detachable through a mounting port of an outer casing of the image projection apparatus. The light source unit includes a light source to emit light for projecting an image, a light source housing to retain the light source, and a cover integrated with the light source housing to cover the mounting port.

As to the above one or more aspects of the present invention, the operational procedure of replacing the light source unit of the image projection apparatus can be simplified.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a perspective view of an image projection apparatus of one or more example embodiments of the present invention;
FIG. 2 is a side view of the image projection apparatus of FIG. 1;
FIG. 3A is a perspective view of an internal configuration of the image projection apparatus of FIG. 1 when an outer cover is removed;
FIG. 3B is a perspective view of an encircled portion in FIG. 3A;
FIG. 4 is a cross-sectional view of a light source module, an image generation module, and an optical projection module of the image projection apparatus of FIG. 1;
FIG. 5 is a perspective view of the image projection apparatus attached on a ceiling;
FIG. 6 is a perspective view of a dot line portion in FIG. 5, in which a light source unit is removed from the image projection apparatus of FIG. 1;
FIG. 7 is a perspective view of the light source unit of one or more example embodiments of the present invention.
FIG. 8 is a disassembled perspective view of the light source unit illustrating an attachment configuration of a unit cover to a light source housing;
FIG. 9 is a side view of the light source unit of one or more example embodiments of the present invention;
FIG. 10 is a cross-sectional view of the light source unit cut at "A-A" in FIG. 9;
FIG. 11A is a perspective view when the light source unit 50 is not mounted in a body casing of the image projection apparatus (unmounted mode);
FIG. 11B is a cross-sectional view cut at "B-B" in FIG. 11A;
FIG. 12A is a perspective view when the light source unit is mounted in the body casing of the image projection apparatus 1 (mounted mode);
FIG. 12B is a cross-sectional view cut at "C-C" in FIG. 12A.
FIG. 13 is a front view of the light source unit viewed from the inside of the image projection apparatus in a detachment direction;
FIGs. 14A and 14B are cross-sectional views cut at "D-D" in FIG. 13, FIG. 14A is a view when the light source unit is not mounted in the body casing of the image projection apparatus (unmounted mode), and FIG. 14B is a view when the light source unit is mounted in the body casing of the image projection apparatus 1 (mounted mode);
FIG. 15A is a cross-sectional view cut at "E-E" in FIG. 9, in which a handle is pivoted to an operating position while the light source unit is not mounted (unmounted mode);
FIG. 15B is another cross-sectional view cut at "E-E" in FIG. 9, in which the handle is at the middle position of the operating position and a non-operated position;
FIG. 15C is another cross-sectional view cut at "E-E" in FIG. 9, in which the handle is pivoted to the non-operated position while the light source unit 50 is mounted (mounted mode).
FIG. 16A illustrates a configuration of an interlocking switch disposed for the image projection apparatus when the handle is pivoted to an operating position;
FIG. 16B illustrates a configuration of the interlocking switch disposed for the image projection apparatus when the handle is at the middle position of the operating position and a non-operated position;
FIG. 16C illustrates a configuration of the interlocking switch disposed for the image projection apparatus when the handle is pivoted to the non-operated position;
FIGs. 17A, 17B, and 17C are respectively cross-sectional views cut at "G-G" in FIGs. 16A, 16B, and 16C;
FIG. 18 illustrates a block diagram of power supply control of the light source unit; and
FIG. 19 is a cross-sectional view cut at "H-H" in FIG. 16C.

The accompanying drawings are intended to depict exemplary embodiments of the present invention and should not be interpreted to limit the scope thereof. The accompanying drawings are not to be considered as drawn to scale unless explicitly noted, and identical or similar reference numerals designate identical or similar components throughout the several views.

### DETAILED DESCRIPTION

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views illustrated in the drawings, specific terminology is employed for the sake of clarity, the present disclosure is not limited to the specific terminology so selected and it is to be understood that each specific element includes all technical equivalents that operate in a similar manner and achieve a similar result. Referring now to the drawings, one or more apparatuses or systems according to one or more example embodiments are described hereinafter.

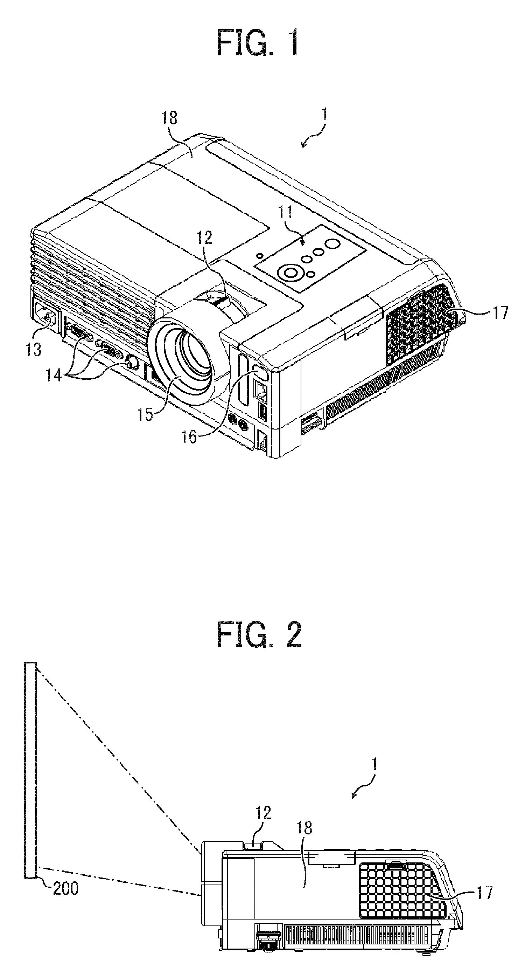

A description is given of an image projection apparatus 1 of one or more example embodiments of the present invention with reference to the drawings. FIG. 1 is a perspective view of the image projection apparatus 1 of one or more example embodiments of the present invention. FIG. 2 is a side view of the image projection apparatus 1. As illustrated in FIGs. 1 and 2, an operation unit 11 can be disposed on a top face of the image projection apparatus 1. The operation unit 11 such as a control panel includes operation buttons to be operated by a user. Further, a zoom lever 12 is disposed for the image projection apparatus 1 to enlarge or reduce the size of a projection image projected on a screen 200 used as a projection face. Further, a power switch 13, an external-input terminal 14, a projection lens 15, and an illuminance sensor 16 are disposed at a front face of the image projection apparatus 1. The power switch 13 is used to turn ON and OFF of power supply to the image projection apparatus 1, the external-input terminal 14 is used to connect external apparatuses such as personal computers and video cameras and the image projection apparatus 1, the projection lens 15 is used to emit light of projection image, and the illuminance sensor 16 is used to detect illuminance of the environment where the image projection apparatus 1 is placed. Further, an air-intake port 17 is disposed at a side face of an outer casing 18 used as an outer cover of the image projection apparatus 1. The air-intake port 17 is used to intake air for cooling the image projection apparatus 1

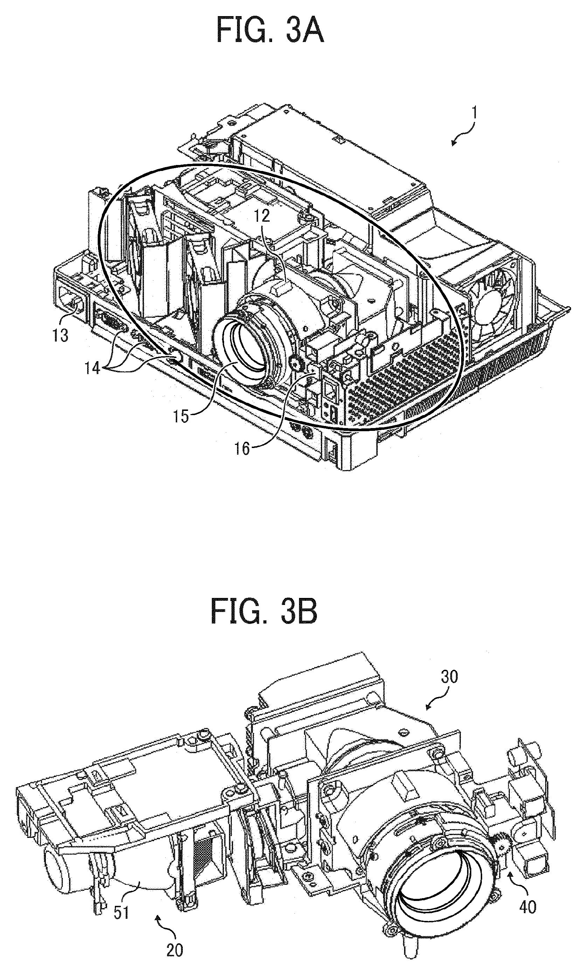

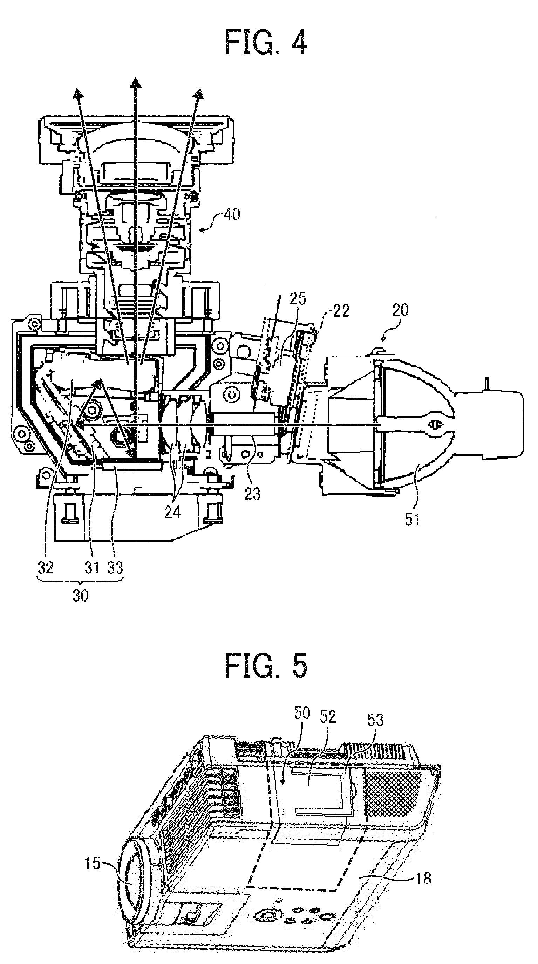

FIG. 3A is a perspective view of an internal configuration of the image projection apparatus 1 when the outer casing 18 is removed. FIG. 3B is a perspective view of an encircled portion in FIG. 3A. FIG. 4 is a cross-sectional view of a light source module, an image generation module, and an optical projection module of the image projection apparatus 1. As illustrated in FIGs. 3 and 4, the image projection apparatus 1 includes, for example, a light source module 20, an image generation module 30, and an optical projection module 40. The light source module 20 includes, for example, a light source 51. The light source 51 employs, for example, halogen lamp, metal halide lamp, and high-pressure mercury lamp as the light source. The image generation module 30 generates images using light coming from the light source 51. The optical projection module 40 projects projection images.

Specifically, the light source module 20 includes a light source unit 50, and an image light processing unit. The light source unit 50 is detachably mounted in a body of the image projection apparatus 1. The image light processing unit includes, for example, a color wheel 22, a light tunnel 23, and two relay lenses 24. The light source 51 is disposed in the light source unit 50. As indicated by arrows of FIG. 4, the light emitted from the light source 51 is separated into R (red), G (green), and B (blue) light components time divisionally when the light emitted from the light source 51 passes through the color wheel 22 rotating in one direction. The color wheel 22 is a disk fixed to a motor axis of a wheel motor 25, and the color wheel 21 includes, for example, R (red), G (green), and B (blue) filters along the rotation direction. Each of the light components separated by the color wheel 22 enters the light tunnel 23. The light tunnel 23 is a tube-shaped member having a square-like cross shape, and its internal face is finished as a mirror face. Each of the light components entering the light tunnel 22 reflects for a plurality of times on the internal face of the light tunnel 23, and is then emitted as uniform light to the two relay lenses 24. As indicated by arrows of FIG. 4, the light passing the two relay lenses 24 reflects on a flat mirror 31 and a concave mirror 32 of the image generation module 30, and then the light is focused on an image generation face of an image generation element such as a digital micro-mirror device (DMD) 33 to generate an image.

The DMD 33 includes a plurality of micro mirrors arranged with a lattice pattern on the image generation face. The micro mirrors can be moved for some range. Specifically, each of the micro mirrors can be inclined for some angle about a torsion axis, and each of the micro mirrors can be set ON and OFF. When the micro mirror is set "ON," the light passing the color wheel 22 is reflected toward the projection lens 15 of the optical projection module 40. When the micro mirror is set "OFF," the light passing the color wheel 22 is reflected to an OFF plate attached to a lighting bracket. By driving each of the micro mirrors independently, the projection light can be controlled pixel by pixel to generate a projection image.

A description is given of a configuration for replacement of the light source unit 50 of one or more example embodiments of the present invention. Conventionally, the following operational procedure is required for replacing the light source unit of the image projection apparatus. Specifically, a light source cover is removed from a mounting port used for the replacement of the light source unit, and the light source unit is replaced through the mounting port with a new one, and then the light source cover is attached to the mounting port. In this operational procedure, the removed light source cover should be placed at a position not hindering the operation, and the removed light source cover should be picked up when the light source cover is attached to the mounting port after the replacement of the light source unit, in which a user has to move around between one place and another place to put or pick up the removed light source cover and other parts, which are complicated works for users. Further, when the image projection apparatus is attached on a ceiling as illustrated in FIG. 5, and the light source unit is replaced for the image projection apparatus in this configuration, a user cannot find a place to put the removed light source cover and the light source unit near the image projection apparatus, which degrades operational efficiency of users.

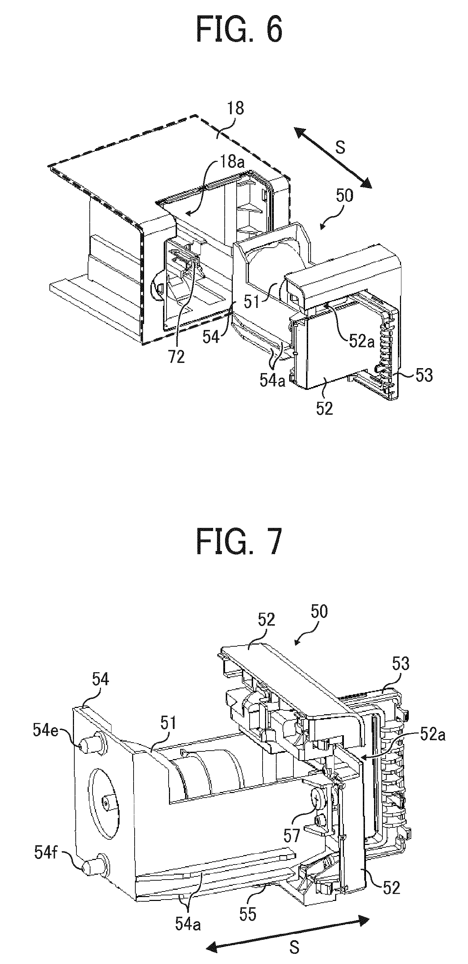

FIG. 6 is a perspective view of a dot line portion in FIG. 5, in which the light source unit 50 is removed or unmounted from the image projection apparatus 1. The top and bottom of FIG. 6 is upside down compared to FIG. 5. FIG. 7 is a perspective view of the light source unit 50 of one or more example embodiments of the present invention. As to the image projection apparatus 1 of one or more example embodiments of the present invention, as indicated by an arrow S (i.e., detachment direction) in FIG. 6, the light source unit 50 is configured to be detachable from one side of a body of the image projection apparatus 1. As to one or more example embodiments of the present invention, until the light source unit 50 is completely removed from a replacement port 18a (i.e., mounting port) formed on the outer casing 18, the light source unit 50 can be supported by the body of the image projection apparatus 1. The outer casing 18 is a part of the body of the image projection apparatus 1. Therefore, even if the image projection apparatus 1 is disposed on a ceiling as illustrated in FIG. 5, the light source unit 50 may not fall from the image projection apparatus 1 when the light source unit 50 is being replaced.

Further, as to one or more example embodiments of the present invention, a unit cover 52 that covers or seals the replacement port 18a is integrated with the light source housing 54 of the light source unit 50. Therefore, when the unit cover 52 is removed from the replacement port 18a, the light source unit 50 can be also removed from the body of the image projection apparatus 1, which is one operational work. Further, when the unit cover 52 is attached to the replacement port 18a, the light source unit 50 can be also attached to the body of the image projection apparatus 1, which is also one operational work. Therefore, compared to conventional configuration having the unit cover and the light source unit separately, the operational procedure of replacing the light source unit 50 can be simplified for the one or more example embodiments of the present invention.

A description is further given of a configuration of replacement of the light source unit 50 of one or more example embodiments of the present invention. The light source unit 50 includes the light source housing 54 that retains the light source 51, and the unit cover 52 attached to the light source housing 54. When the light source unit 50 is mounted in the body of the image projection apparatus 1, the unit cover 52 covers or seals the replacement port 18a, and the unit cover 52 becomes a part of the outer casing 18, in which the outer face of the unit cover 52 is almost flush or flat with the outer face of the outer casing 18 of the image projection apparatus 1.

Further, the unit cover 52 includes a handle 53. The handle 53 has a pivot point 53a on the unit cover 52, with which the handle 53 can pivot between a non-operated position and an operating position. Further, the unit cover 52 includes a reception groove 52a to receive the handle 53 in the reception groove 52a. When the handle 53 is pivoted to the non-operated position, the handle 53 can be received in the reception groove 52a, and the outer faces of the outer casing 18 and the handle 53 become the almost flush or flat face as illustrated in FIG. 5. FIG. 6 illustrates the operating position of the handle 53 when the handle 53 is pulled out from the reception groove 52a of the unit cover 52.

When replacing the light source unit 50, an operator pulls out the handle 53 of the light source unit 50 from the reception groove 52a of the unit cover 52a, and pivots the handle 53 to the operating position illustrated in FIG. 6. Then, the operator grabs the handle 53 and pulls the unit cover 52 from the body of the image projection apparatus 1 along the direction indicated by the arrow "S" in FIG. 6, with which the light source unit 50, configured by the light source housing 54 and the unit cover 52 integrated together, can be pulled to the outside of the image projection apparatus 1. When attaching the light source unit 50, the operator performs the operation in the reverse sequence.

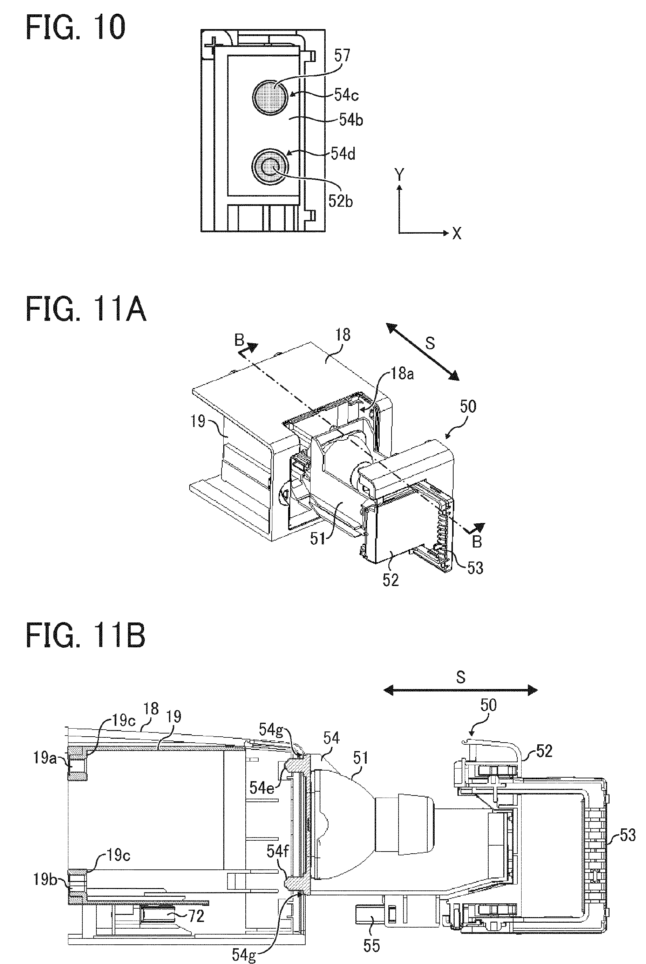

Further, the light source unit 50 includes a unit side connector 55 used for supplying power to the light source 51, and further, the light source unit 50 includes a guide 54a on a side face of the light source housing 54 as illustrated in FIG. 7. The guide 54a can slide on a slide rail disposed inside the body of the image projection apparatus 1, with which the light source unit 50 can slide on along the slide rail disposed inside the body of the image projection apparatus 1. When the light source unit 50 is inserted into the body of the image projection apparatus 1 along the slide rail disposed inside the body of the image projection apparatus 1, the unit side connector 55 engages a body-side connector 72 (see FIG. 11) disposed inside the body of the image projection apparatus 1. With this configuration, connection points of the body-side connector 72 and the unit side connector 55 are connected, and then power can be supplied to the light source 51 from the body-side connector 72 via the unit side connector 55.

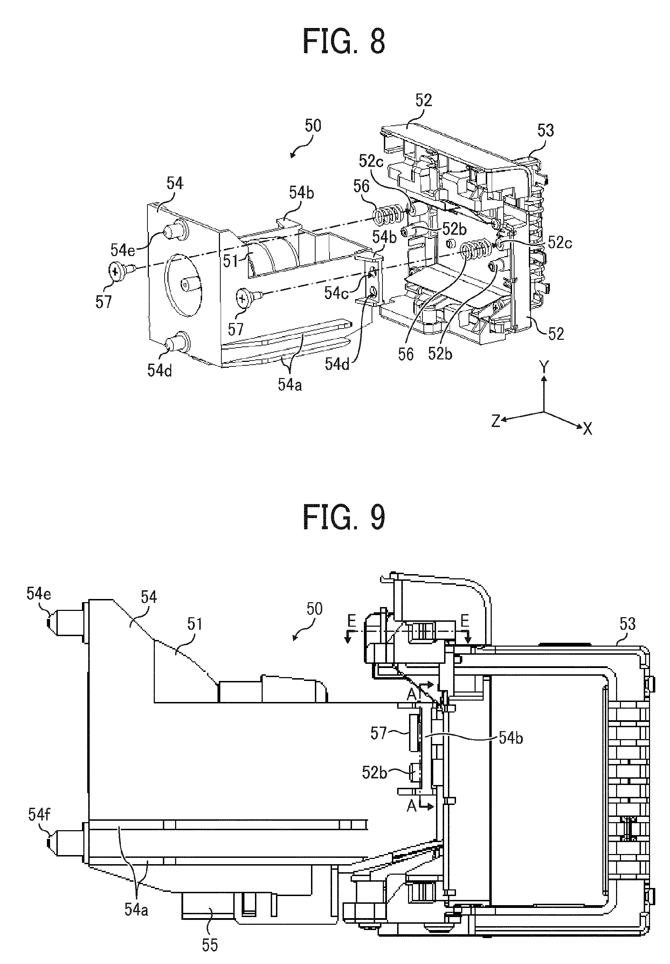

A description is given of an attachment configuration of the unit cover 52 to the light source housing 54 of one or more example embodiments of the present invention. FIG. 8 is a disassembled perspective view of the light source unit 50 illustrating the attachment configuration of the unit cover 52 to the light source housing 54. As to one or more example embodiments of the present invention, the unit cover 52 is integrated with the light source housing 54 to configure the light source unit 50. Specifically, the unit cover 52 is integrated with the light source housing 54 by using an attachment configuration to be described below. Specifically, the light source housing 54 has two attachment members 54b, and each of the attachment members 54b has two holes 54c and 54d, and the unit cover 52 has two guide pins 52b. Each of the guide pins 52b can be inserted into the corresponding holes 54d of each of the attachment member 54b of the light source housing 54. Further, each of stepped screws 57 used as a fixing member can be inserted into the corresponding holes 54c of each of the attachment members 54b of the light source housing 54, and the stepped screw 57 is screwed and fixed to a screw hole 52c formed on the unit cover 52, which are on the same axis line.

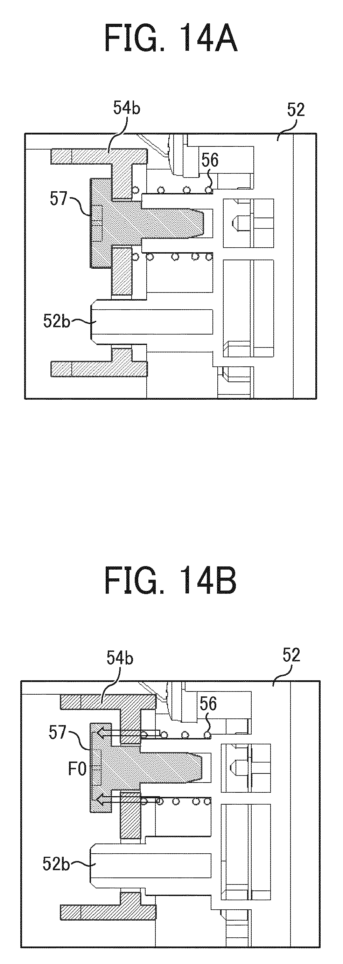

Further, the spring 56 used as a biasing member is disposed between each of the attachment members 54b of the light source housing 54, and the unit cover 52 as illustrated in FIG. 8. The spring 56 applies a biasing force in a direction of separating the unit cover 52 and the light source housing 54 with each other. When the stepped screw 57 is screwed and fixed to the screw hole 52c formed on the unit cover 52, the stepped screw 57 is inserted into the inner space of the spring 56 sandwiched between the attachment members 54b and the unit cover 52. In this configuration, the stepped screw 57 is screwed and fixed to the screw hole 52c by setting a clearance between a flange surface of the stepped screw 57 and a top surface of the screw hole 52c, and the clearance is set greater than a thickness of the attachment member 54b of the light source housing 54 as illustrated in FIG. 14A and 14B to be described later. With this configuration, when the unit cover 52 receives an external force greater than the biasing force of the spring 56, the unit cover 52 can be moved along the detachment direction "S" (i.e., Z-axis direction in FIG. 8) relative to the light source housing 54 for a given play clearance.

FIG. 9 is a side view of the light source unit 50 of one or more example embodiments of the present invention. FIG. 10 is a cross-sectional view of the attachment member 54b of the light source housing 54 cut at "A-A" in FIG. 9, in which the two holes 54c and 54d formed on the attachments member 54b, the stepped screw 57, and the guide pin 52b are shown to indicate a relationship of size of each of the members. As illustrated in FIG. 10, the inner diameter of the hole 54c is set greater than the outer diameter of the stepped screw 57 inserted into the hole 54c for a given play clearance. Further, the inner diameter of the hole 54d is set greater than the outer diameter of the guide pin 52b inserted into the hole 54d for a given play clearance. With this configuration, the unit cover 52 can be moved relative to the light source housing 54 in a direction perpendicular to the detachment direction "S" such as X-axis direction and Y-axis direction in FIG. 10 for a given play clearance.

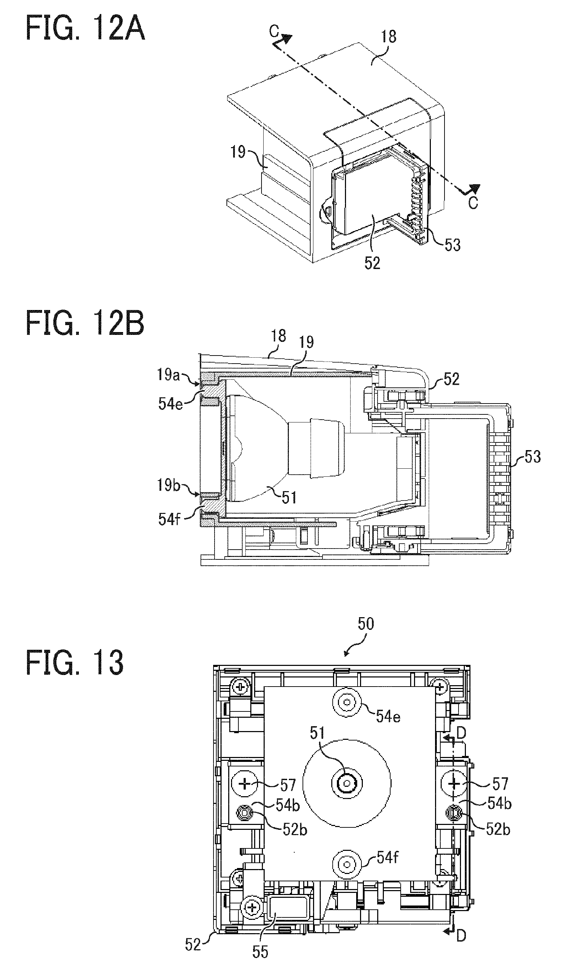

FIG. 11A is a perspective view when the light source unit 50 is not mounted in the body of the image projection apparatus 1 (unmounted mode), and FIG. 11B is a cross-sectional view cut at "B-B" in FIG. 11A. FIG. 12A is a perspective view when the light source unit 50 is mounted in the body of the image projection apparatus 1 (mounted mode), and FIG. 12B is a cross-sectional view cut at "C-C" in FIG. 12A. When the light source unit 50 is to be mounted into the body of the image projection apparatus 1, an operator pulls out the handle 53 from the reception groove 52a of the unit cover 52 of the light source unit 50 as illustrated in FIGs. 11A and 11B, and inserts the light source unit 50 into the image projection apparatus 1 through the replacement port 18a along the detachment direction "S shown in FIG. 11 from one side face of the image projection apparatus 1 while grabbing the handle 53, in which the guide 54a of the light source unit 50 can slide on the slide rail disposed inside the body of the image projection apparatus 1, and thereby the light source unit 50 can be inserted correctly along the slide rail.

When the light source unit 50 is further inserted into the body of the image projection apparatus 1 along the slide rail, positioning pins 54e and 54f disposed at the front end of the insertion direction of the light source housing 54 of the light source unit 50 respectively fit in positioning holes 19a and 19b formed on a body-side frame 19, which is disposed in the image projection apparatus 1 as a reference position setting unit. Then, as illustrated in FIGs. 12A and 12B, a seating surface 54g at the base of each of the positioning pins 54e and 54f abuts a receiving surface 19c of the body-side frame 19, with which the positioning pins 54e and 54f respectively engage the positioning holes 19a and 19b, and the light source housing 54 of the light source unit 50 can be set at a correct position relative to the body-side frame 19.

FIG. 13 is a front view of the light source unit 50 viewed from the inside of the image projection apparatus 1 in the detachment direction "S." FIGs. 14A and 14B are cross-sectional views cut at "D-D" in FIG. 13. FIG. 14A is a view when the light source unit 50 is not mounted in the body of the image projection apparatus 1 (unmounted mode), and FIG. 14B is a view when the light source unit 50 is mounted in the body of the image projection apparatus 1 (mounted mode).

When the light source unit 50 is not yet mounted completely, the light source housing 54 is biased to a direction separating the light source housing 54 from the unit cover 52 by the biasing force of the spring 56 as illustrated in FIG. 14A, in which abutting of the attachment member 54b of the light source housing 54 to the flange surface of the stepped screw 57 is maintained as illustrated in FIGs. 14A. When the light source unit 50 is further inserted into the inside the image projection apparatus 1 under this condition, the seating surface 54g of each of the positioning pins 54e and 54f of the light source unit 50 abuts the receiving surface 19c of the body-side frame 19 of the image projection apparatus 1.

At this stage, as to the light source housing 54 of the light source unit 50, the positioning pins 54e and 54f of the light source housing 54 respectively engage the positioning holes 19a and 19b of the body-side frame 19, with which the light source housing 54 can be set at a correct position relative to the body-side frame 19. However, the unit cover 52 of the light source unit 50 does not yet cover the replacement port 18a completely, and thereby the unit cover 52 protrudes a little from the outer casing 18 of the image projection apparatus 1.

Then, the operator further pushes the light source unit 50 into inside the image projection apparatus 1 while grabbing the handle 53, with which the unit cover 52 can be moved toward the light source housing 54 set at the correct position relative to the body-side frame 19 against the biasing force of the spring 56, and the unit cover 52 is pushed until the outer faces of the unit cover 52 and the outer casing 18 of the image projection apparatus 1 become the almost flush face. With this configuration, the unit cover 52 can cover or seal the replacement port 18a completely.

Then, when the unit cover 52 is locked to the outer casing 18, the light source housing 54 is biased toward the inside of the body of the image projection apparatus 1 along the detachment direction "S" (Z-axis direction in FIG. 8) by receiving the biasing force of the spring 56 (see "F0" in FIG. 14B). With this configuration, the abutting of the seating surface 54g of each of the positioning pins 54e and 54f of the light source housing 54 and the receiving surface 19c of the body-side frame 19 of the image projection apparatus 1 can be maintained securely. Therefore, even if the unit cover 52 can be moved relative to the light source housing 54 along the detachment direction "S," the correctly-set position of the light source housing 54 in the detachment direction "S" can be maintained securely.

Further, the light source 51 of the light source unit 50 is required to correctly emit the light to a light irradiation target such as optical parts (e.g., color wheel 22, light tunnel 23, relay lens 24) disposed along an optical path of the image projection apparatus 1. Therefore, the light source housing 54 retaining the light source 51 is required to be set at the correct position relative to the body-side frame 19 that has higher positioning precision for the optical parts. Further, the unit cover 52 of the light source unit 50 is required to be set at a correct position relative to the replacement port 18a of the outer casing 18 so that the unit cover 52 of the light source unit 50 can cover or seal the replacement port 18a of the outer casing 18 securely.

However, a precision level of a positional relationship between the body-side frame 19 to which the light source housing 54 (and light source 51) of the light source unit 50 is set at the correct position, and the replacement port 18a of the outer casing 18 to which the unit cover 52 of the light source unit 50 is set at the correct position is not so high.

If the image projection apparatus is configured as conventional apparatuses, the unit cover 52 to cover the replacement port 18a of the outer casing 18, and the light source unit 50 are configured as separate parts, in which the positioning of the light source housing 54 of the light source unit 50 can be performed separately from the positioning of the unit cover 52 without affecting each other. Therefore, even if the precision level of the positional relationship between the body-side frame 19 and the replacement port 18a of the outer casing 18 is not so high, the light source housing 54 and the unit cover 52 can be set at the correct positions.

However, as to one or more example embodiments of the present invention, the unit cover 52 is integrated with the light source housing 54 to collectively configure the light source unit 50, in which the unit cover 52 is attached to the light source housing 54. Therefore, if a positional relationship between the unit cover 52 and the light source housing 54 is fixed, the positioning of the light source housing 54 and the positioning the unit cover 52 cannot be performed correctly at the same time. Specifically, when one of the positioning of the light source housing 54 and the positioning the unit cover 52 is performed correctly, other one of the positioning of the light source housing 54 and the positioning the unit cover 52 cannot be performed correctly. Therefore, the precision level of the positional relationship between the body-side frame 19 to which the light source housing 54 is set at the correct position, and the replacement port 18a of the outer casing 18 to which the unit cover 52 is set at the correct position is required to be enhanced, which will increase the cost.

As to the light source unit 50 of one or more example embodiments of the present invention, as above described, the unit cover 52 can be moved relative to the light source housing 54 in any directions such as X-axis direction, Y-axis direction, Z-axis direction (FIG 8) for a given play clearance. Therefore, even if the precision level of the positional relationship between the body-side frame 19 and the replacement port 18a of the outer casing 18 may not be so high, both of the light source housing 54 and the unit cover 52 can be set at the correct positions.

Further, depending on the precision level of the positional relationship between the body-side frame 19 and the replacement port 18a of the outer casing 18, the unit cover 52 can be configured to move relative to the light source housing 54 in only a specific direction instead of all directions (e.g., X-axis direction, Y-axis direction, Z-axis direction) in FIG. 8.

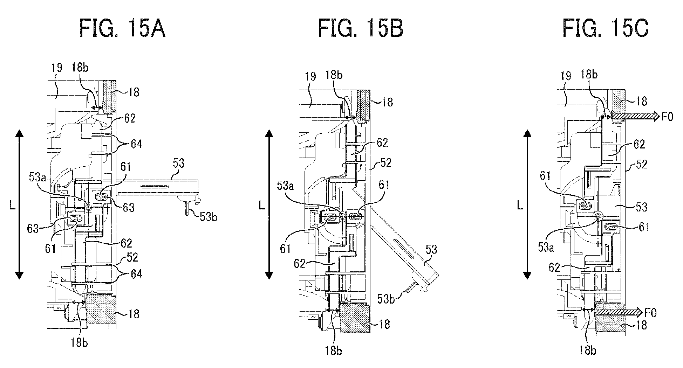

A description is given of a lock mechanism that locks the light source unit 50 to the body of the image projection apparatus 1. FIGs. 15A, 15B, and 15C are cross-sectional views cut at "E-E" in FIG. 9. FIGs. 15A, 15B, and 15C illustrate a lock mechanism that can lock the light source unit 50 to the body of the image projection apparatus 1. FIG. 15A illustrates a case when the handle 53 is pivoted to the operating position while the light source unit 50 is not mounted (unmounted mode). FIG. 15B illustrates a case when the handle 53 is at the middle position of the operating position and the non-operated position. FIG. 15C illustrates a case when the handle 53 is pivoted to the non-operated position while the light source unit 50 is mounted (mounted mode).

The unit cover 52 supports the pivot point 53a of the handle 53, and the handle 53 can pivot about the pivot point 53a. The handle 53 has a boss pins 61 at the point symmetry positions relative to the pivot point 53a by setting a given length. The handle 53 is attached to the unit cover 52 while each of the boss pins 61 is inserted in a long hole 63 formed on a lock member 62. The lock member 62 is supported by a lock member guide 64 so that the lock member 62 can move along a direction indicated by an arrow "L" in FIG. 15.

When the handle 53 pivots about the pivot point 53a, the boss pin 61 rotates around the pivot point 53a by using the pivot point 53a as the rotation center. When the boss pin 61 rotates around the pivot point 53a, the long hole 63 of the lock member 62 inserted with the boss pins 61 is pushed, with which the lock member 62 can move along the lock member guide 64 along the direction of the arrow "L." With this configuration, when the handle 53 is pivoted from the operating position (FIG. 15A) to the non-operated position (FIG. 15C) via the transitional position (FIG. 15B), the lock member 62 engages with a lock hole 18b disposed at a position inside the outer casing 18 of the image projection apparatus 1(FIG. 15C).

When the handle 53 is pivoted to the non-operated position (FIG. 15C), the unit cover 52 receives the biasing force of the spring 56, which presses the unit cover 52 toward the outside direction of the image projection apparatus 1 along the detachment direction "S" relative to the light source housing 54 already set as a the correction position by the body-side frame 19. Therefore, the lock member 62 in the unit cover 52 is pressed to the inner wall of the outer casing 18 by this biasing force, and the unit cover 52 can be set at the correct position in the detachment direction "S" (Z-axis direction in FIG. 8) so that the unit cover 52 and the outer casing 18 of the image projection apparatus 1 can form the flush or flat face. Further, since the lock member 62 is pressed to the inner wall of the outer casing 18 by the biasing force of the spring 56, a movement of the lock member 62 can be prevented due to the effect of the friction between the lock member 62 and the inner wall of the outer casing 18, with which a locked condition can be maintained securely.

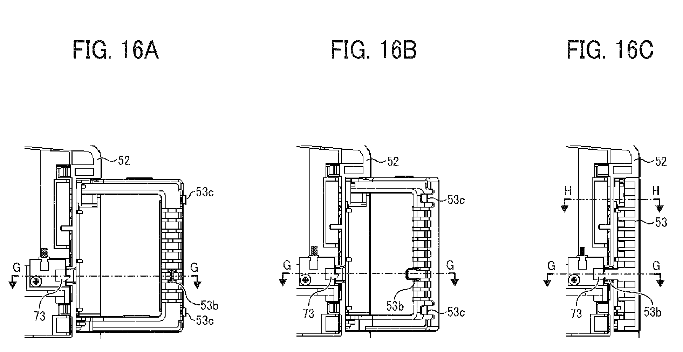

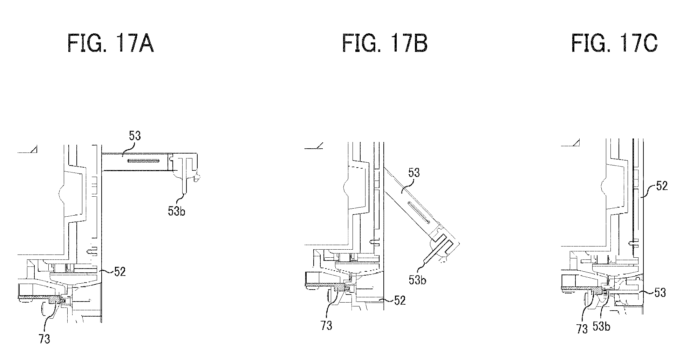

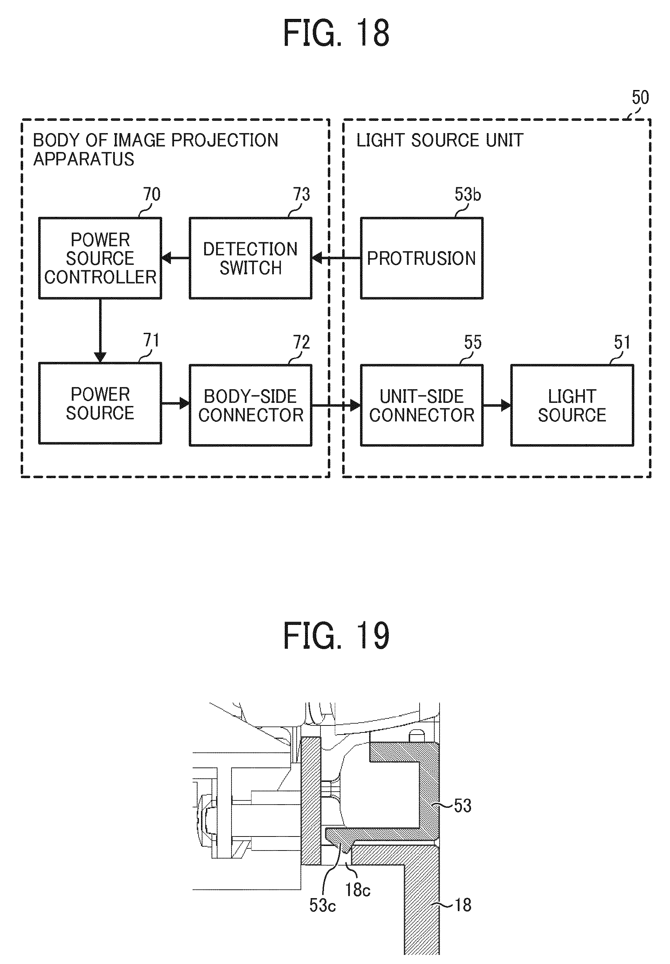

FIG. 16A, 16B, and 16C illustrate a configuration of an interlocking switch disposed for the image projection apparatus 1. FIG. 17A, 17B, and 17C are respectively illustrate cross-sectional views cut at "G-G" in FIG. 16A, 16B, and 16C. FIG. 18 illustrates a block diagram of power supply control of the light source unit 50. When the handle 53 is pivoted from the operating position (FIG. 16A) to the non-operated position (FIG. 16C) via the transitional position (FIG. 16B), the handle 53 is received in the reception groove 52a of the unit cover 52. With this configuration, as above described, the light source unit 50 can be locked to the body of the image projection apparatus 1 by using the lock member 62. Further, when the handle 53 is received in the reception groove 52a, a detection switch 73 disposed for the unit cover 52 can be pressed by a protrusion 53b of the handle 53 as illustrated in FIG. 17C, in which the detection switch 73 is used as a lock condition detector.

As illustrated in FIG. 18, the detection switch 73 is connected to a power source controller 70, wherein the power source controller 70 is used as a power supply controller that controls a power source 71 that supplies power to the light source 51 of the light source unit 50 via the body-side connector 72. When the detection switch 73 detects the pressing by the protrusion 53b, the power source controller 70 instructs the power source 71 to supply power to the body-side connector 72, and when the detection switch 73 does not detect the pressing by the protrusion 53b, the power source controller 70 instructs the power source 71 not to supply power to the body-side connector 72.

In this configuration, when the handle 53 is pulled out from the reception groove 52a of the unit cover 52, and then the locked condition of the light source unit 50 to the body of the image projection apparatus 1 is released, the power supply from the body-side connector 72 to the light source unit 50 can be stopped. In this configuration, the power supply from the body-side connector 72 to the light source unit 50 can be stopped before removing the light source unit 50 from the body of the image projection apparatus 1. Therefore, higher safety can be attained for users.

Further, as to one or more example embodiments of the present invention, as illustrated in FIG. 19, when the handle 53 is received in the reception groove 52a of the unit cover 52, a claw 53c disposed on the handle 53 fits in a claw hole 18c disposed on the outer casing 18. With this configuration, the pushing out of the handle 53 causable by the reaction force of the detection switch 73 can be prevented.

The above described one or more example embodiments of the present invention can include following configurations.

### (Configuration A)

As to configuration A, the image projection apparatus 1 includes the outer casing 18 having the mounting port such as the replacement port 18a, and the light source unit 50 detachably disposed in the body of the image projection apparatus 1 through the mounting port. The light source unit 50 includes the light source 51 to emit light to be used for projecting an image, the light source housing 54 to retain the light source 51; and the unit cover 52 integrated with the light source housing 54 to cover the mounting port. With employing this configuration, the light source unit 50 can be removed from the body through the mounting port at the same time when the unit cover 52 is removed from the mounting port. Further, the light source unit 50 can be mounted in the body through the mounting port at the same time when the unit cover 52 is attached to the mounting port. Therefore, the operational procedure of replacing the light source unit 50 of the image projection apparatus 1 can be simplified.

### (Configuration B)

As to configuration A, the unit cover 52 configures a part of the outer casing 18 of the image projection apparatus 1. When the image projection apparatus is used for projecting images, the light source in the light source unit becomes high temperature. As to conventional configurations, when the light source unit is to be replaced right after the use of the image projection apparatus, the cover alone can be removed but the light source unit having high temperature cannot be removed because the cover and the light source unit are separate parts, in which the light source unit can be removed after the light source unit is cooled enough. By contrast, as to configuration B, the unit cover 52 integrated with the light source housing 54 configures the part of the outer casing 18. The outer casing 18 is designed based on a given standard so that temperature of the outer casing 18 is set to a temperature level that persons can touch the outer casing 18 without causing injuries when the image projection apparatus 1 is being used. Therefore, the unit cover 52 configuring the part of the outer casing 18 can be also designed based on the given standard so that temperature of the unit cover 52 is set to the temperature level that persons can touch without causing injuries. Therefore, an operator can touch the unit cover 52 to remove the unit cover 52 right after the use of the image projection apparatus 1. With this configuration, the operator can remove the unit cover 52 right after the use of the image projection apparatus 1, and can also remove the light source unit 50 integrally including the unit cover 52 from the image projection apparatus 1, and can replace the light source unit 50 right after the use of the image projection apparatus 1.

### (Configuration C)

As to configurations A or B, the image projection apparatus 1 includes a first positioning unit to set the light source 51 at a correct position relative to a light irradiation target disposed in the image projection apparatus 1 when the light source unit 50 is mounted in the image projection apparatus 1, and a second positioning unit to set the unit cover 52 at a correct position relative to the mounting port 18a when the light source unit 50 is mounted in the image projection apparatus (1). The first positioning unit includes, for example, the positioning holes 19a and 19b of the body-side frame 19 and the positioning pins 54e and 54f of the light source unit 50. The second positioning unit includes, for example, the lock hole 18b of the body, and the lock member 62 of the light source unit 50 to set the unit cover 52 at the correct position relative to the mounting port of the image projection apparatus 1. With employing this configuration, the light source 51 and the unit cover 52 of the light source unit 50 can be set at the correct positions of the body of the image projection apparatus 1.

### (Configuration D)

As to configuration C, the unit cover 52 integrated with the light source housing 54 to collectively configure the light source unit 50 is moveable relative to the light source 51. With employing this configuration, even if the precision level of the positional relationship between the body-side frame 19, used for setting the correct position of the light source 51 of the light source unit 50, and the replacement port 18a of the outer casing 18, used for setting the correct position of the unit cover 52 of the light source unit 50, is not so high, both of the light source housing 54 and the unit cover 52 can be set at the correct positions, and thereby the light source 51 of the light source unit 50 and the unit cover 52 of the light source unit 50 can be set at the correct positions of the body of the image projection apparatus 1.

### (Configuration E)

As to configuration D, the unit cover 52 integrated with the light source housing 54 is moveable relative to the light source 51 in a direction perpendicular to the detachment direction S of the light source unit 50 such as X-axis direction and Y-axis direction. With employing this configuration, even if the precision level of the positional relationship between the body-side frame 19, used for setting the correct position of the light source 51 of the light source unit 50, and the replacement port 18a of the outer casing 18, used for setting the correct position of the unit cover 52 of the light source unit 50, is not so high in the direction perpendicular to the detachment direction S of the light source unit 50, the light source 51 and the unit cover 52 of the light source unit 50 can be set at the correct positions of the body of the image projection apparatus 1.

### (Configuration F)

As to configurations D or E, the first positioning unit sets the light source 51 at the correct position by abutting the light source 51 to the reference position setting unit such as the body-side frame 19, disposed inside the image projection apparatus 1, along the direction S of the light source unit 50. The unit cover 52 integrated with the light source housing 54 is moveable relative to the light source 51 in the detachment direction S of the light source unit 50, and the unit cover 52 includes a biasing member such as the spring 56 to bias the unit cover 52 and the light source 51 in opposite directions with each other along the detachment direction S of the light source unit 50. With employing this configuration, even if the precision level of the positional relationship between the body-side frame 19, used for setting the correct position of the light source 51 of the light source unit 50, and the replacement port 18a of the outer casing 18, used for setting the correct position of the unit cover 52 of the light source unit 50, is not so high in the detachment direction S of the light source unit 50, the light source 51 of the light source unit 50 and the unit cover 52 of the light source unit 50 can be set at the correct positions of the body of the image projection apparatus 1. Further, since the abutting of the light source 51 to the reference position setting unit such as the body-side frame 19 of the image projection apparatus 1 can be maintained securely by the biasing force of the biasing member, the light source 51 can be set at the correct position in the detachment direction "S" of the light source unit 50, and can be maintained securely.

### (Configuration G)

As to configurations A to F, the mounting port such as the replacement port 18a is an opening formed on one face such as a one side face of the outer casing 18, and the light source unit 50 is detachable from the image projection apparatus 1 through the mounting port. With employing this configuration, until the light source unit 50 is completely removed from a replacement port 18a (i.e., mounting port) formed on the outer casing 18, the light source unit 50 can be supported by the body of the image projection apparatus 1. Therefore, even if the image projection apparatus 1 is disposed on the ceiling as illustrated in FIG. 5, the light source unit 50 may not fall from the image projection apparatus 1 when the light source unit 50 is being replaced.

### (Configuration H)

As to configurations A to G, the image projection apparatus 1 further includes a handle 53 having a pivot point 53a on the unit cover 52, in which the handle 53 is pivotable between the non-operated position and the operating position, and the lock device (e.g., 61, 62, 63, 64) to lock the light source unit 50 to the body of the image projection apparatus 1 when the handle 53 is pivoted to the non-operated position, and to release locking of the light source unit 50 to the body of the image projection apparatus 1 when the handle 53 is pivoted to the operating position. With employing this configuration, an operator can lock the light source unit 50 to the body of the image projection apparatus 1, and can release the locked condition of the light source unit 50 to the body by pivoting the handle 53. Therefore, compared to a configuration that the pivoting of the handle and the switching of the locked condition are performed separately, the operational procedure of replacing the light source unit of the image projection apparatus can be simplified.

### (Configuration I)

As to configuration H, the image projection apparatus 1 further includes the lock condition detector such as the detection switch 73 to detect whether the light source unit 50 is locked to the outer casing 18, and the power supply controller such as the power source controller 70 to control power supply to the light source 51 based on a detection by the lock condition detector. The power supply controller stops power supply to the light source 51 when the lock condition detector 73 detects that the light source unit 50 is not locked to the body of the image projection apparatus 1, and the power supply controller supplies power to the light source 51 when the lock condition detector detects that the light source unit 50 is locked to the body of the image projection apparatus 1. With employing this configuration, when the handle 53 is pivoted to the operating position, and then a locked condition of the light source unit 50 to the body of the image projection apparatus 1 is released, the power supply to the light source unit 50 can be stopped. In this configuration, the power supply from to the light source unit 50 can be stopped before removing the light source unit 50 from the body of the image projection apparatus 1. Therefore, higher safety can be attained for users.

### (Configuration J)

As to configuration J, the light source unit 50 is detachably disposed to the image projection apparatus 1, and the light source unit 50 is detachable through the mounting port such as the replacement port 18a of the outer casing 18 of the image projection apparatus 1. The light source unit 50 includes the light source 51 to emit light for projecting an image, the light source housing 54 to retain the light source 51, and the cover 52 integrated with the light source housing 54 to cover the replacement port 18. With employing this configuration, the light source unit 50 can be removed from the body frame through the mounting port at the same time when the unit cover 52 is removed from the mounting port 18a. Further, the light source unit 50 can be mounted in the body of the image projection apparatus 1 through the mounting port at the same time when the unit cover 52 is attached to the mounting port. Therefore, the operational procedure of replacing the light source unit 50 of the image projection apparatus 1 can be simplified.

As to the above described one or more example embodiments of the present invention, the operational procedure of replacing the light source unit 50 of the image projection apparatus 1 can be simplified compared to conventional image projection apparatuses.

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims.

## Claims

1. An image projection apparatus (1) comprising:
an outer casing (18) having a mounting port (18a);
a light source unit (50) detachably disposed in a body of image projection apparatus (1) through the mounting port (18a), the light source unit (50) including:
a light source (51) to emit light to be used for projecting an image;
a light source housing (54) to retain the light source (51); and
a cover (52) integrated with the light source housing (54) to cover the mounting port (18a).

2. The image projection apparatus (1) of claim 1, wherein the cover (52) configures a part of the outer casing (18) of the image projection apparatus (1).

3. The image projection apparatus (1) of claim 1 or 2, further comprising:
a first positioning unit (19, 19a, 19b, 54e, 54f) to set the light source (51) at a correct position relative to a light irradiation target disposed in the body of the image projection apparatus (1) when the light source unit (50) is mounted in the body of the image projection apparatus (1), the light irradiation target being an irradiation target of the light emitted from the light source (51); and
a second positioning unit (62) to set the cover (52) at a correct position relative to the mounting port (18a) when the light source unit (50) is mounted in the body of the image projection apparatus (1).

4. The image projection apparatus (1) of claim 3, wherein the cover (52) integrated with the light source housing (54) is moveable relative to the light source (51).

5. The image projection apparatus (1) of claim 4, wherein the cover (52) integrated with the light source housing (54) is moveable relative to the light source (51) in a direction perpendicular to a detachment direction (S) of the light source unit (50).

6. The image projection apparatus (1) of claim 4 or claim 5, wherein the first positioning unit (19, 19a, 19b, 54e, 54f) sets the light source (51) at the correct position by abutting the light source unit (50) to a reference position setting unit (19), disposed inside the image projection apparatus (1), along the detachment direction (S) of the light source unit (50), and
wherein the cover (52) integrated with the light source housing (54) is moveable relative to the light source (51) in the detachment direction (S) of the light source unit (50),
wherein the cover (52) includes a biasing member (56) to bias the cover (52) and the light source (51) in opposite directions with each other along the detachment direction (S) of the light source unit (50).

7. The image projection apparatus (1) of any one of claims 1 to 6, wherein the mounting port (18a) is an opening formed on one side face of the outer casing (18), and the light source unit (50) is detachable from the image projection apparatus (1) through the mounting port (18a).

8. The image projection apparatus (1) of any one of claims 1 to 7, further comprising:
a handle (53) having a pivot point (53a) on the cover (52), the handle (53) pivotable between a non-operated position and an operating position; and
a lock device (61, 62, 63, 64) to lock the light source unit (50) to the body of the image projection apparatus (1) when the handle (53) is pivoted to the non-operated position, and to release locking of the light source unit (50) to the body of the image projection apparatus (1) when the handle (53) is pivoted to the operating position.

9. The image projection apparatus (1) of claim 8, further comprising
a lock condition detector (73) to detect whether the light source unit (50) is locked to the body of the image projection apparatus (1); and
a power supply controller (70) to control power supply to the light source (51) based on a detection by the lock condition detector (73).

10. The image projection apparatus (1) of claim 9, wherein the power supply controller (70) stops power supply to the light source (51) when the lock condition detector (73) detects that the light source unit (50) is not locked to the body of the image projection apparatus (1), and
wherein the power supply controller (70) supplies power to the light source (51) when the lock condition detector (73) detects that the light source unit (50) is locked to the body of the image projection apparatus (1).

11. A light source unit (50) detachably disposed to an image projection apparatus (1), the light source unit (50) detachable through a mounting port (18a) of an outer casing (18) of the image projection apparatus (1), the light source unit (50) comprising:
a light source (51) to emit light for projecting an image;
a light source housing (54) to retain the light source (51); and
a cover (52) integrated with the light source housing (54) to cover the mounting port (18a).
